# EUROPEAN PATENT APPLICATION

(11) **EP 4 759 440 A1**
(43) Date of publication of application: **17.06.2026**
(21) Application number: 24864323.1
(22) Date of filing: 07.08.2024
(51) Int. Cl.: B05D 7/14, C09D 1/00, C09D 183/06

(54) **SURFACE TREATMENT METHOD FOR METAL OR ALLOY, AND METAL OR ALLOY PRODUCT**

(30) Priority: 15.09.2023 CN 202311191388
(71) Applicant: Fuyao Glass Industry Group Co., Ltd., Fuqing, Fujian 350300 (CN)
(72) Inventor: YANG, Huan, Fuzhou, Fujian 350300 (CN); JIA, Yinghui, Fuzhou, Fujian 350300 (CN); CHEN, Lifeng, Fuzhou, Fujian 350300 (CN); LIU, Xiangwei, Fuzhou, Fujian 350300 (CN)
(74) Representative: Patentanwälte Olbricht Buchhold Keulertz
(86) International application number: PCT/CN2024/110277
(87) International publication number: WO 2025/055600

(57) **Abstract**

Provided in the present invention are a surface treatment method for a metal or an alloy, and a metal or alloy product. The surface treatment method for a metal or an alloy comprises: forming an organic-inorganic hybrid layer on a surface of an anodic oxidation layer located on at least one surface of a metal or an alloy, wherein the organic-inorganic hybrid layer has a spatial network structure formed by silicon dioxide, a copolymer of organic oxysilane containing an epoxy group and a benzophenone compound containing a hydroxyl group, and nanocrystallized superfine carbon black. At least one surface of the metal or alloy product has an anodic oxidation layer and an organic-inorganic hybrid layer, wherein the organic-inorganic hybrid layer has a spatial network structure formed by silicon dioxide, a copolymer of organic oxysilane containing an epoxy group and a benzophenone compound containing a hydroxyl group, and nanocrystallized superfine carbon black. **In** the technical solution of the present invention, by forming an organic-inorganic hybrid high-brightness black layer, not only are there a good orange peel appearance effect and xenon arc aging resistance, but an extremely high hardness and good car washing resistance are also provided.

## Description

### CROSS-REFERENCE TO RELATED APPLICATIONS

The present application claims priority to Chinese Patent Application No. 202311191388.3, filed with the State Intellectual Property Office of China on September 15, 2023 and entitled "SURFACE TREATMENT METHOD FOR METAL OR ALLOY, AND METAL OR ALLOY PRODUCT", the content of which is incorporated herein by reference in its entirety.

### TECHNICAL FIELD

The present invention relates to a surface treatment method for metal or alloy and a metal or alloy product, pertaining to the technical field of metal and alloy treatment.

### BACKGROUND ART

Aluminum alloy decorative strips, owing to their unique surface metallic texture and low material density, are increasingly used for automotive exterior parts and strongly favored by a vast number of car owners, especially high-end customers. Due to their material properties, aluminum alloy decorative strips cannot be directly used as automotive exterior parts unless their surfaces have been subjected to surface treatment. The surface-treated aluminum alloy decorative strips have more diverse and personalized appearances, and show significantly improved surface hardness and corrosion resistance. Currently, commonly used surface treatment methods for aluminum alloy decorative strips include anodic oxidation, baking paint, powder spraying, and the like.

Aluminum alloy for an automotive exterior part is made into two common product types: inherent color products and high-gloss black products. Among them, the production process for the inherent color products is anodic oxidation, while the production process for the high-gloss black products is baking paint or powder spraying. The traditional baking paint process adopted in the industry is a "3 Coat, 2 Bake" process, that is, after cathodic electrophoresis, a primer is sprayed onto the surface of an aluminum alloy and baked once; then a color coat and a top coat are sprayed, followed by another bake. The entire process involves three sprayings and two bakings, which is not only a complicated production process with significant VOCs emissions, but also has high energy consumption, not conforming to the development direction towards green, low-carbon, and environmental friendliness. Due to these disadvantages, the high-gloss black powder spraying process has also been applied. It only requires one spraying and one baking, with almost no VOCs emissions during the entire process and relatively much lower energy consumption. However, a powder coating also has limitations in its application: since the hardness is lower than that of baking paint, and it only consists of a single layer and lacks the outermost clear coat protective layer in the baking paint process, it is extremely prone to scratching during production and use, which severely affects the appearance, making it difficult to be accepted as an exterior part, especially by high-end automotive original equipment manufacturers.

At the same time, for exterior part products, the appearance quality of the product is equally important as its performance. With regard to both the baking paint process and the powder spraying process, customers have certain requirements for the product's appearance, and high-end the customers have higher requirements. However, none of the current high-gloss black aluminum alloy exterior part products can simultaneously meet the requirements for both appearance and performance.

### SUMMARY OF THE INVENTION

To solve the above technical problems, the objective of the present invention is to provide a surface treatment method for metal or alloy and a metal or alloy product. The method forms an organic-inorganic hybrid layer on the surface of an anodized layer, thereby satisfying the requirements for appearance and car wash resistance of exterior parts products, while reducing the manufacturing cost of the products and VOCs emissions.

To solve the above technical problems, the present invention first provides a surface treatment method for metal or alloy, comprising forming an organic-inorganic hybrid layer on the surface of an anodized layer on at least one surface of the metal or alloy;
wherein the organic-inorganic hybrid layer has a spatial network structure formed by silicon dioxide, and contains a copolymer of an epoxy-containing organooxysilane and a hydroxyl-containing benzophenone-based compound, and nanosized ultrafine carbon black.

The present invention also provides a metal or alloy product, which has on at least one surface thereof an anodized layer and an organic-inorganic hybrid layer, wherein the organic-inorganic hybrid layer is formed on the surface of the anodized layer;
wherein the organic-inorganic hybrid layer has a spatial network structure formed by silicon dioxide, and contains a copolymer of an epoxy-containing organooxysilane and a hydroxyl-containing benzophenone-based compound, and nanosized ultrafine carbon black.

According to a specific embodiment of the present invention, preferably, the nanosized ultrafine carbon black has a particle size D90 of 10-250 nm, more preferably a particle size D90 of 50-150 nm. In the aforesaid organic-inorganic hybrid layer, the nanosized ultrafine carbon black is uniformly dispersed in the spatial network structure and the copolymer, and attached to other components through van der Waals force. Large-particle carbon black reduces blackness and produces adverse effects. However, the present invention adopts a nanosizing process and formulation to control the size of carbon black particles, and can reduce reflection and scattering and achieve sufficient blackness with an ultra-thin coating.

According to a specific embodiment of the present invention, preferably, the nanosized ultrafine carbon black is modified nanosized ultrafine carbon black such that it can be persistently suspended in the coating system without precipitation. The modification refers to surface carboxylation modification. Through this graft modification, the repulsive force between carbon black particles can be increased, agglomeration of a high concentration of carbon black in the binder and consequent coarsening can be prevented, and the content of hydrogen element in carbon black is also increased, which can reduce the viscosity of the system, increase fluidity, help improve dispersibility and storage stability of the system, and enhance blackness.

According to a specific embodiment of the present invention, preferably, the spatial network structure formed by silicon dioxide in the organic-inorganic hybrid layer is formed from oligomers generated by dehydration condensation of two or more organooxysilanes.

According to a specific embodiment of the present invention, preferably, at least one of the organooxysilane contains an epoxy group. More preferably, the epoxy-containing organooxysilane(s) includes one or a combination of two or more of 3-(2,3-glycidoxy)propyltrimethoxysilane, 3-(2,3-glycidoxy)propylmethyldimethoxysilane, 3-(2,3-glycidoxy)propyltriethoxysilane, 2-(3,4-epoxycyclohexyl)ethyltrimethoxysilane, 2-(3,4-epoxycyclohexyl)ethylmethyldimethoxysilane, and the like.

According to a specific embodiment of the present invention, preferably, at least one of the organooxysilanes is free of an epoxy group. By using both the epoxy-containing organooxysilane and the epoxy-free organooxysilane for preparation, it can be ensured that the organic-inorganic hybrid layer is not prone to cracking while having sufficiently high hardness. More preferably, the epoxy-free organooxysilane includes a compound represented by general formula RₐSiX₍₄₋ₐ₎, wherein a is 0-3, R represents a non-hydrolyzable group selected from an alkyl group, an alkenyl group, an alkynyl group, and an aryl group; and X represents a hydrolyzable group selected from an alkoxy group, an aryloxy group, an acyloxy group, and an alkyl carbonyl group; preferably, the epoxy-free organooxysilane includes one or a combination of two or more of methyltrimethoxysilane, tetramethoxysilane, tetraacetoxysilane, methylphenyldimethoxysilane, dimethoxydiacetoxysilane, diethyldiacetoxysilane, di-tert-butyloxydiacetoxysilane, diethoxydiphenylsilane, and trimethylphenoxysilane.

According to a specific embodiment of the present invention, preferably, the organooxysilane includes at least one or a combination of two or more of dialkoxysilanes, trialkoxysilanes, and tetraalkoxysilanes.

According to a specific embodiment of the present invention, preferably, the copolymer of the epoxy-containing organooxysilane and the hydroxyl-containing benzophenone-based compound is crosslinked in the spatial network structure through hydroxyl groups. That is, the copolymer forms linking bonds via hydroxyl groups to the groups in the spatial network structure, such that the copolymer is connected to the spatial network structure. The aging resistance of the organic-inorganic hybrid layer can be improved by virtue of the ultraviolet absorption capacity of the benzophenone-based compound, enabling it to maintain the high-gloss black effect persistently without discoloration or loss of gloss.

According to a specific embodiment of the present invention, preferably, the hydroxyl-containing benzophenone-based compound includes one or a combination of two or more of 2,4-dihydroxybenzophenone, 2,2',3-trihydroxybenzophenone, 2,2',4-trihydroxybenzophenone, 2,2',5-trihydroxybenzophenone, 2,2',6-trihydroxybenzophenone, 2,2',4,4'-tetrahydroxybenzophenone, 2,4-dihydroxy-2',4'-dimethoxybenzophenone, 2-hydroxy-4-n-octoxybenzophenone, and the like.

According to a specific embodiment of the present invention, preferably, the organic-inorganic hybrid layer has a thickness of 5 µm-25 µm, more preferably 8 µm-20 µm.

According to a specific embodiment of the present invention, preferably, in preparation of the organic-inorganic hybrid layer, the solvent used includes a first co-solvent and a second co-solvent, in which the first co-solvent includes water, and the second co-solvent includes lower alcohols and/or glycol ethers. Thus, it enables the coating of the present invention to release much less VOCs during the application process than traditional coatings.

According to a specific embodiment of the present invention, preferably, the lower alcohol includes one or a combination of two or more of methanol, ethanol, and isopropanol; and the glycol ether includes one or a combination of two or more of ethylene glycol monomethyl ether, diethylene glycol monomethyl ether, ethylene glycol monobutyl ether, diethylene glycol monobutyl ether propylene glycol monomethyl ether, and dipropylene glycol monomethyl ether.

According to a specific embodiment of the present invention, preferably, the organic-inorganic hybrid layer is prepared by a coating method. For example, at least one epoxy-containing organooxysilane (at a content of 16.3%-18.5%) and one epoxy-free organooxysilane (at a content of 3.6%-4.8%) are selected to generate oligomers by hydrolysis. A copolymer of an epoxy-containing organooxysilane (at a content of 5.3%-15.4%) and a hydroxyl-containing benzophenone-based compound (at a content of 1.3%-3.8%) and nanosized ultrafine carbon black (at a content of 2.8%-12.5%) are added, and a first co-solvent (at a content of 10.0%-30.0%, preferably 18.2%-24.4%) and a second co-solvent (at a content of 20.0%-50.0%, preferably 30.3%-40.7%) are added. After being mixed and stirred at 30-50°C for a certain period of time, the mixture is applied to a substrate by a conventional coating method such as spray coating, dip coating, flow coating, and the like. The coating is cured at 150-200°C for 10-90 minutes to form a high-gloss black organic-inorganic hybrid layer. In the above preparation process, the sum of the contents of the epoxy-containing organooxysilane (added in two batches), the epoxy-free organooxysilane, the hydroxyl-containing benzophenone-based compound, the nanosized ultrafine carbon black, the first co-solvent, and the second co-solvent is 100%.

According to a specific embodiment of the present invention, preferably, the alloy is an aluminum alloy.

According to a specific embodiment of the present invention, preferably, the anodized layer has a thickness of 5 µm-20 µm, more preferably 8 µm-15 µm.

According to a specific embodiment of the present invention, the anodized layer can be obtained by a conventional process. Moreover, after the anodized layer is obtained, the anodized layer can be treated to be dark-colored by an electrolytic coloring or dyeing process, preferably a dyeing process. On one hand, it can make the outer high-gloss black coating darker in color; on the other hand, it can avoid possible white exposure on the coating.

According to a specific embodiment of the present invention, preferably, the metal or alloy product is a high-gloss black aluminum alloy exterior decorative part. The high-gloss black aluminum alloy exterior decorative part comprises an aluminum alloy substrate, an anodized layer obtained by a conventional process on the aluminum alloy substrate (the anodized layer is colored by electrolytic coloring or dyeing), and a high-gloss black organic-inorganic hybrid coating layer applied on the anodized layer.

A key index to evaluation of the appearance quality of a high-gloss black product is the orange peel value, which usually includes three components: the R value, the SW value, and the LW value. Among them, the larger the R value and the smaller the SW and LW values, the better the appearance quality is. Under normal circumstances, the R value of a product obtained by baking paint or powder spraying is 6.5 to 8, and the SW and LW values thereof are 10 to 25. The orange peel R value of the high-gloss black aluminum alloy exterior decorative part according to the present invention is greater than 9.5, and both the SW value and LW value thereof are smaller than 5; more preferably, the orange peel R value is greater than 10, and both the SW value and LW value are smaller than 3.

The surface of the high-gloss black aluminum alloy exterior decorative part according to the present invention has a pencil hardness of >4H, and more preferably >5H.

The car wash resistance of the high-gloss black aluminum alloy exterior decorative part according to the present invention can meet the requirement that the 60° gloss retention is >85%, more preferably 90%, in the car wash resistance test specified in the DIN EN ISO 20566 (2013) standard.

The aging resistance of the high-gloss black aluminum alloy exterior decorative part according to the present invention can meet the requirement of passing the 4000-hour test, more preferably the 6000-hour test, in the xenon lamp aging resistance test specified in the SAE J2527 standard.

According to a specific embodiment of the present invention, preferably, the high-gloss black aluminum alloy exterior decorative part is an automotive exterior decorative part.

The technical solutions provided by the present invention form a high-gloss black organic-inorganic hybrid layer on the surface of an anodized layer, so that it not only has an excellent orange peel effect in appearance and excellent xenon lamp aging resistance, but also has extremely high hardness, and exhibits excellent car wash resistance, thereby satisfying the requirements of all automotive original equipment manufacturers in the current market.

### BRIEF DESCRIPTION OF THE DRAWINGS

Figure 1 is a schematic representation of a specific embodiment of the high-gloss black aluminum alloy exterior decorative part product provided according to the present invention.
Figure 2 is an appearance comparison between the high-gloss black aluminum alloy exterior decorative part product of Example 1 of the present invention and a traditional high-gloss black exterior decorative part product obtained by baking paint.
Figure 3 is an appearance comparison between the high-gloss black aluminum alloy exterior decorative part product of Example 1 of the present invention and a traditional high-gloss black exterior decorative part product obtained by baking paint.
Figure 4 shows the appearance after a car wash resistance test.
Figure 5 shows the coating status of the exterior decorative part products of Comparative Example 1 and Comparative Example 2.
Figure 6 is the appearance of the exterior decorative part product with the high-gloss black organic-inorganic hybrid layer of Example 2 after a car wash resistance test.
Figure 7 is the appearance of the exterior decorative part product with the high-gloss black organic-inorganic hybrid layer of Example 5 after a car wash resistance test.

### DETAILED DESCRIPTION OF EMBODIMENTS

In order to provide a better understanding of the technical features, objectives, and beneficial effects of the present invention, the technical solutions of the present invention will now be described in detail below, but the detailed description shall not be construed as limiting the implementable scope of the present invention.

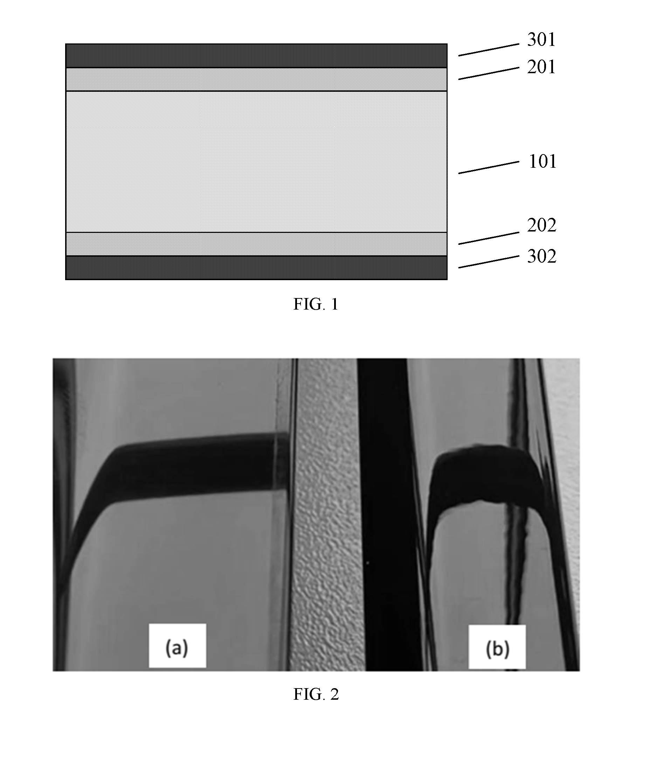

The structure of a specific embodiment of the high-gloss black aluminum alloy exterior decorative part product provided according to the present invention is shown in Figure 1. This high-gloss black aluminum alloy exterior decorative part product includes an aluminum substrate 101, anodized layers 201 and 202 provided respectively on the two surfaces of the aluminum substrate 101, and high-gloss black organic-inorganic hybrid layers 301 and 302 applied respectively on the surfaces of the two anodized layers 201 and 202.

### Example 1

The example prepared a high-gloss black aluminum alloy exterior decorative part product on the surface of an aluminum alloy substrate, wherein:
the epoxy-free organooxysilanes used were tetramethoxysilane and methyltrimethoxysilane;
the epoxy-containing organooxysilane used was 3-(2,3-glycidoxy)propyltrimethoxysilane;
the hydroxyl-containing benzophenone-based compound used was 2,4-dihydroxybenzophenone;
the first co-solvent was water;
the second co-solvent was a mixture of isopropanol : ethylene glycol monomethyl ether : propylene glycol monomethyl ether in a mass ratio of 20:20:60.

The detailed preparation process was as follows. Tetramethoxysilane, methyltrimethoxysilane, and 3-(2,3-glycidoxy)propyltrimethoxysilane (used at contents of 2.5%, 2%, and 17% respectively, based on 100% of the total weight of the raw materials for the high-gloss black organic-inorganic hybrid layer) were added to 20% of the first co-solvent, and underwent hydrolysis under an environment at pH=2-4 to generate oligomers. Next, a copolymer of 3-(2,3-glycidoxy)propyltrimethoxysilane and 2,4-dihydroxybenzophenone (used at contents of 12.5% and 3.2% respectively, based on 100% of the total weight of the raw materials for the high-gloss black organic-inorganic hybrid layer), 35% of the second co-solvent, and 7.8% of nanosized ultrafine carbon black having a particle size D90 of 50-150 nm were added. Subsequently, they were mixed and stirred at 30-50°C for a certain period of time to obtain an applicable coating material. The coating material was applied to the substrate by a conventional coating method such as spray coating, dip coating, flow coating, and the like, and cured at 150-200°C for 10-90 minutes to form a high-gloss black organic-inorganic hybrid layer, which had a thickness of 15-18 µm.

### Example 2

The example prepared a high-gloss black aluminum alloy exterior decorative part product on the surface of an aluminum alloy substrate, wherein:
the epoxy-free organooxysilanes used were diethoxydiphenylsilane and dimethoxydiacetoxysilane;
the epoxy-containing organooxysilane used was 2-(3,4-epoxycyclohexyl)ethylmethyldimethoxysilane;
the hydroxyl-containing benzophenone-based compound used was 2,2',6-trihydroxybenzophenone;
the first co-solvent was water;
the second co-solvent was a mixture of ethanol : ethylene glycol monomethyl ether : propylene glycol monomethyl ether in a mass ratio of 25:25:50.

The detailed preparation process was as follows. Diethoxydiphenylsilane, dimethoxydiacetoxysilane, and 2-(3,4-epoxycyclohexyl)ethylmethyldimethoxysilane (used at contents of 2.3%, 1.8%, and 16.5% respectively, based on 100% of the total weight of the raw materials for the high-gloss black organic-inorganic hybrid layer) were added to 23.8% of the first co-solvent, and underwent hydrolysis under an environment at pH=2-4 to generate oligomers. Next, a copolymer of 2-(3,4-epoxycyclohexyl)ethylmethyldimethoxysilane and 2,2',6-trihydroxybenzophenone (used at contents of 8.5% and 2.6% respectively, based on 100% of the total weight of the raw materials for the high-gloss black organic-inorganic hybrid layer), 36% of the second co-solvent, and 8.5% of nanosized ultrafine carbon black having a particle size D90 of 50-150 nm were added. Subsequently, they were mixed and stirred at 30-50°C for a certain period of time to obtain an applicable coating material. The coating material was applied to the substrate by a conventional coating method such as spray coating, dip coating, flow coating, and the like, and cured at 150-200°C for 10-90 minutes to form a high-gloss black organic-inorganic hybrid layer, which had a thickness of 15-18 µm.

### Example 3

The example prepared a high-gloss black aluminum alloy exterior decorative part product on the surface of an aluminum alloy substrate, wherein:
the epoxy-free organooxysilane used was methyltrimethoxysilane;
the epoxy-containing organooxysilane used was 3-[(2,3)-glycidoxy]propylmethyldimethoxysilane;
the hydroxyl-containing benzophenone-based compound used was 2,4-dihydroxy-2',4'-dimethoxybenzophenone;
the first co-solvent was water;
the second co-solvent was a mixture of isopropanol : diethylene glycol monobutyl ether propylene glycol monomethyl ether : dipropylene glycol monomethyl ether in a mass ratio of 25:30:45.

The detailed preparation process was as follows. Methyltrimethoxysilane and 3-[(2,3)-glycidoxy]propylmethyldimethoxysilane (used at contents of 3.7% and 16.8% respectively, based on 100% of the total weight of the raw materials for the high-gloss black organic-inorganic hybrid layer) were added to 18.6% of the first co-solvent, and underwent hydrolysis under an environment at pH=2-4 to generate oligomers. Next, a copolymer of 3-[(2,3)-glycidoxy]propylmethyldimethoxysilane and 2,4-dihydroxy-2',4'-dimethoxybenzophenone (used at contents of 6.8% and 1.8% respectively, based on 100% of the total weight of the raw materials for the high-gloss black organic-inorganic hybrid layer), 40.7% of the second co-solvent, and 11.6% of nanosized ultrafine carbon black having a particle size D90 of 50-150 nm were added. Subsequently, they were mixed and stirred at 30-50°C for a certain period of time to obtain an applicable coating material. The coating material was applied to the substrate by a conventional coating method such as spray coating, dip coating, flow coating, and the like, and cured at 150-200°C for 10-90 minutes to form a high-gloss black organic-inorganic hybrid layer, which had a thickness of 15-18 µm.

### Example 4

The example prepared a high-gloss black aluminum alloy exterior decorative part product on the surface of an aluminum alloy substrate, wherein:
the epoxy-free organooxysilanes used were tetraacetoxylsilane and methylphenyldimethoxysilane;
the epoxy-containing organooxysilane used was 3-(2,3-glycidoxy)propyltriethoxysilane;
the hydroxyl-containing benzophenone-based compound used was 2,2',3-trihydroxybenzophenone;
the first co-solvent was water;
the second co-solvent was a mixture of isopropanol: diethylene glycol monobutyl ether propylene glycol monomethyl ether : propylene glycol monomethyl ether in a mass ratio of 15:35:50.

The detailed preparation process was as follows. Tetraacetoxylsilane, methylphenyldimethoxysilane, and 3-(2,3-glycidoxy)propyltriethoxysilane (used at contents of 2.3%, 1.3%, and 17.4% respectively, based on 100% of the total weight of the raw materials for the high-gloss black organic-inorganic hybrid layer) were added to 24.4% of the first co-solvent, and underwent hydrolysis under an environment at pH=2-4 to generate oligomers. Next, a copolymer of 3-(2,3-glycidoxy)propyltriethoxysilane and 2,2',3-trihydroxybenzophenone (used at contents of 14.5% and 1.3% respectively, based on 100% of the total weight of the raw materials for the high-gloss black organic-inorganic hybrid layer), 30.5% of the second co-solvent, and 8.3% of nanosized ultrafine carbon black having a particle size D90 of 50-150 nm were added. Subsequently, they were mixed and stirred at 30-50°C for a certain period of time to obtain an applicable coating material. The coating material was applied to the substrate by a conventional coating method such as spray coating, dip coating, flow coating, and the like, and cured at 150-200°C for 10-90 minutes to form a high-gloss black organic-inorganic hybrid layer, which had a thickness of 15-18 µm.

### Example 5

The example prepared a high-gloss black aluminum alloy exterior decorative part product on the surface of an aluminum alloy substrate, wherein:
the epoxy-free organooxysilanes used were di-tert-butyloxydiacetoxysilane and trimethylphenoxysilane;
the epoxy-containing organooxysilane used was 2-(3,4-epoxycyclohexyl)ethyltrimethoxysilane;
the hydroxyl-containing benzophenone-based compound used was 2,2',4,4'-tetrahydroxybenzophenone;
the first co-solvent was water;
the second co-solvent was a mixture of isopropanol : ethylene glycol monobutyl ether : propylene glycol monomethyl ether in a mass ratio of 22:35:43.

The detailed preparation process was as follows. Di-tert-butyloxydiacetoxysilane, trimethylphenoxysilane, and 2-(3,4-epoxycyclohexyl)ethyltrimethoxysilane (used at contents of 2.5%, 2.3%, and 17.1% respectively, based on 100% of the total weight of the raw materials for the high-gloss black organic-inorganic hybrid layer) were added to 23.6% of the first co-solvent, and underwent hydrolysis under an environment at pH=2-4 to generate oligomers. Next, a copolymer of 2-(3,4-epoxycyclohexyl)ethyltrimethoxysilane and 2,2',4,4'-tetrahydroxybenzophenone (used at contents of 9.8% and 2.6% respectively, based on 100% of the total weight of the raw materials for the high-gloss black organic-inorganic hybrid layer), 38.5% of the second co-solvent, and 3.6% of nanosized ultrafine carbon black having a particle size D90 of 50-150 nm were added. Subsequently, they were mixed and stirred at 30-50°C for a certain period of time to obtain an applicable coating material. The coating material was applied to the substrate by a conventional coating method such as spray coating, dip coating, flow coating, and the like, and cured at 150-200°C for 10-90 minutes to form a high-gloss black organic-inorganic hybrid layer, which had a thickness of 15-18 µm.

The appearance of the exterior decorative part product with the high-gloss black organic-inorganic hybrid layer of Example 1 was compared with that of a traditional high-gloss black exterior decorative part product obtained by baking paint (using the traditional "3 Coat, 2 Bake" process, wherein the primer was a PPG paint, the color paint was a PPG paint, and the clear coat was a PPG paint), and the results are shown in Figure 2. Figure 2(a) shows the high-gloss black aluminum alloy exterior decorative part product prepared in Example 1, and Figure 2(b) shows the traditional high-gloss black exterior decorative part product obtained by baking paint. According to the boundary clarity and distortion of the object's reflection shown in Figure 2, it can be seen that the appearance of the high-gloss black aluminum alloy exterior decorative part product of Example 1 was significantly better than that of the traditional high-gloss black exterior decorative part product obtained by baking paint.

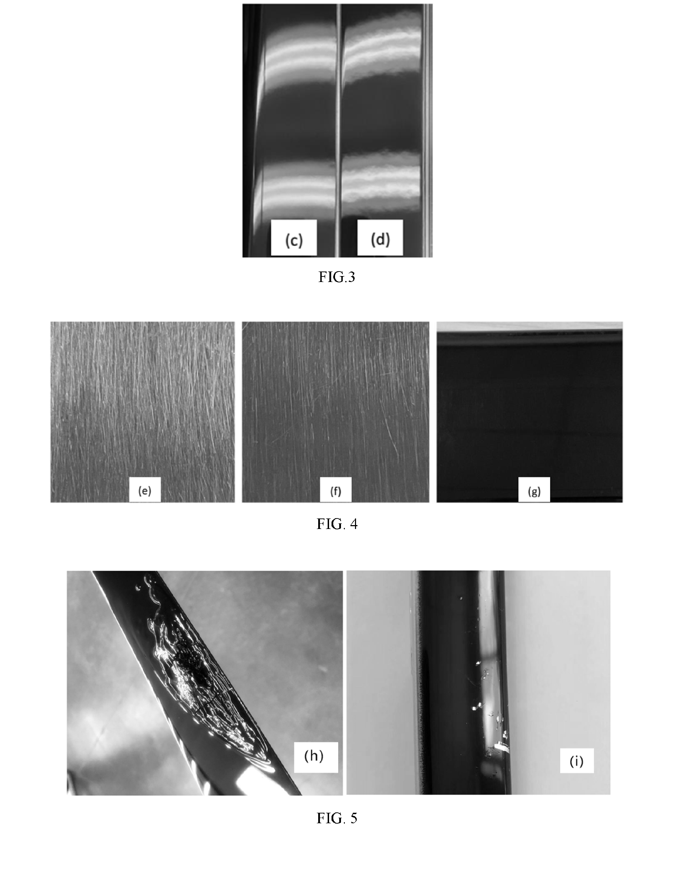

The appearance of the exterior decorative part product with the high-gloss black organic-inorganic hybrid layer of Example 1 was compared under a strip inspection lamp with that of the traditional high-gloss black exterior decorative part product obtained by baking paint. The difference in quality of the product appearance can be observed from the reflection of the lamp on the products, and the results are shown in Figure 3. Figure 3(c) shows the high-gloss black aluminum alloy exterior decorative part product prepared in Example 1, and Figure 3(d) shows the traditional high-gloss black exterior decorative part product obtained by baking paint. From Figure 3, it can be seen that the appearance of the high-gloss black aluminum alloy exterior decorative part product of Example 1 was significantly better than that of the traditional high-gloss black exterior decorative part product obtained by baking paint.

A BYK orange peel meter was used to test the exterior decorative part products with the high-gloss black organic-inorganic hybrid layer of Examples 1-5 and the traditional high-gloss black exterior decorative part product by baking paint to obtain the orange peel data. The results: for the high-gloss black aluminum alloy exterior decorative part products prepared in Examples 1-5, the R value was 9.3-10.5, the SW value was 3.3-5.3, and the LW value was 1.0-3.2; for the traditional high-gloss black exterior decorative part product obtained by baking paint, the R value was 7.5, the SW value was 25.9, and the LW value was 7.9. It can thus be concluded that the exterior decorative part product with the high-gloss black organic-inorganic hybrid layer according to the present invention had a more excellent appearance than the traditional high-gloss black exterior decorative part product obtained by baking paint. The test results are shown in Table 1.

In Table 1, the R value, SW (Short Wave), and LW (Long Wave) are indices characterizing orange peel; CF is an index characterizing the appearance, which reflects a comprehensive result of gloss (15%), Distinctness of Image (35%), and orange peel (50%); and DOI refers to the distinctness of image.

**Table 1**

| | R Value | SW Value | LW Value | CF | DOI |
|---|---|---|---|---|---|
| Baking Paint | 7.5 | 25.9 | 7.9 | 65.0 | 92.1 |
| Example 1 | 10.5 | 4.0 | 1.0 | 82.3 | 96.2 |
| Example 2 | 10.0 | 3.3 | 2.3 | 71.4 | 91.9 |
| Example 3 | 9.3 | 4.7 | 3.2 | 67.9 | 93.2 |
| Example 4 | 9.7 | 3.6 | 2.7 | 69.9 | 91.8 |
| Example 5 | 10.5 | 5.3 | 1.5 | 74.8 | 90.9 |

Car wash resistance tests were conducted on the exterior decorative part product with the high-gloss black organic-inorganic hybrid layer of Example 1, the traditional high-gloss black exterior decorative part product by baking paint (using the traditional "3 Coat, 2 Bake" process, where the primer was a PPG paint, the color paint was a PPG paint, and the clear coat was a PPG paint), and a high-gloss black exterior decorative part product obtained by powder spraying (using Aksu QN009 powder). The test results are shown in Table 2.

**Table 2**

| Product Type | Gloss before Car Wash Test | | | Gloss after Car Wash Test | | | Gloss Retention | | |
|---|---|---|---|---|---|---|---|---|---|
| | 20° | 60° | 85° | 20° | 60° | 85° | 20% | 60% | 85% |
| Powder Spraying | 84.1 | 96.1 | 97.4 | 39.6 | 65.6 | 94.9 | 47.09% | 68.26% | 97.43% |
| Baking Paint | 95.1 | 97.1 | 100 | 44.3 | 74.3 | 95.5 | 46.58% | 76.52% | 95.50% |
| Example 1 | 93.6 | 95.6 | 100 | 82.9 | 90.4 | 100 | 88.57% | 94.56% | 100.00% |
| Example 2 | 92.8 | 96.2 | 100 | 81.5 | 90.1 | 100 | 87.82% | 93.66% | 100.00% |
| Example 5 | 94.6 | 94.3 | 100 | 82.7 | 90.0 | 100 | 87.42% | 95.44% | 100.00% |

Figure 4 shows the appearance after the car wash resistance test according to the DIN EN ISO 20566 (2013) standard.

Figure 4(e) shows the high-gloss black exterior decorative part product obtained by powder spraying. It can be seen that the scratch marks were very severe after the car wash test. According to the test results shown in Table 2, the 60° gloss retention was < 70%;

Figure 4(f) shows the high-gloss black exterior decorative part product obtained by baking paint. It can be seen that the scratch marks after the car wash test were better than those of the product by powder spraying, but were still relatively severe. According to the test results shown in Table 2, the 60° gloss retention was < 80%;

Figure 4(g) shows the exterior decorative part product with the high-gloss black organic-inorganic hybrid layer of Example 1. It can be seen that, after the car wash test, there were very few scratch marks, which were significantly better than those of the comparative products. According to the test results shown in Table 2, the 60° gloss retention was > 90%.

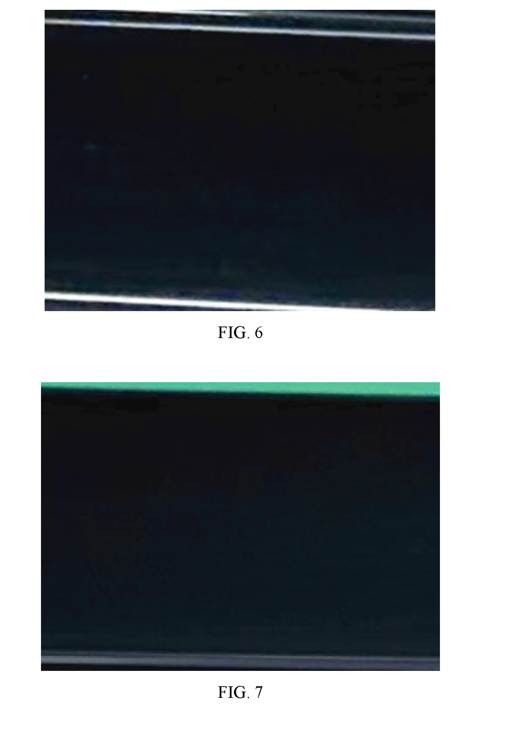

Figures 6 and 7 show the appearances of the exterior decorative part products with the high-gloss black organic-inorganic hybrid layer of Examples 2 and 5 after the car wash resistance test, respectively. It can be seen from Figures 6 and 7 that, after the car wash resistance test, there were very few scratch marks on the surface of the products, which were almost invisible, and these products were significantly better than the comparative products. According to the test results shown in Table 2, the 60° gloss retentions of Examples 2 and 5 were both > 90%.

It can thus be determined that the exterior decorative part product with the high-gloss black organic-inorganic hybrid layer of the present invention has better car wash resistance than the traditional high-gloss black exterior decorative part products obtained by baking paint or powder spraying, and can maintain an excellent appearance for a long time during use.

### Comparative Example 1

The comparative example prepared a high-gloss black aluminum alloy exterior decorative part product on the surface of an aluminum alloy substrate, wherein:
the epoxy-free organooxysilanes used were methyltrimethoxysilane and tetraacetylsilane;
the hydroxyl-containing benzophenone-based compound used was 2,4-dihydroxybenzophenone;
the first co-solvent was water;
the second co-solvent was a mixture of ethanol : isopropanol : dipropylene glycol monomethyl ether in a mass ratio of 25:25:50.

The detailed preparation process was as follows. Methyltrimethoxysilane (10.5%) and tetraacetylsilane (11%) were added to the first co-solvent (24%), and underwent hydrolysis under an environment at pH=2-4 to generate oligomers. Next, 2,4-dihydroxybenzophenone (14.5%), the second co-solvent (32%), and nanosized ultrafine carbon black (8%, having a particle size of 5-100 nm) were added. Subsequently, they were mixed and stirred at 30-50°C for a certain period of time to obtain an applicable coating material. The coating material was applied to the substrate by a conventional coating method such as spray coating, dip coating, flow coating, and the like, and cured at 150-200°C for 10-90 minutes to form a high-gloss black organic-inorganic hybrid layer, which had a thickness of 10-13 µm.

### Comparative Example 2

The comparative example prepared a high-gloss black aluminum alloy exterior decorative part product on the surface of an aluminum alloy substrate, wherein:
the epoxy-containing organooxysilane used was 2-(3,4-epoxycyclohexyl)ethylmethyldimethoxysilane;
the hydroxyl-containing benzophenone-based compound used was 2,2',3-trihydroxybenzophenone;
the first co-solvent was water;
the second co-solvent was a mixture of ethanol and ethylene glycol monobutyl ether in a mass ratio of 40:60.

The detailed preparation process was as follows. 2-(3,4-epoxycyclohexyl)ethylmethyldimethoxysilane (20%) was added to the first co-solvent (20%), and underwent hydrolysis under an environment at pH=2-4 to generate oligomers. Next, a copolymer of 2-(3,4-epoxycyclohexyl)ethylmethyldimethoxysilane (12.5%) and 2,2',3-trihydroxybenzophenone (3.2%), the second co-solvent (35%), and nanosized ultrafine carbon black (9.3%, having a particle size of 5-100 nm) were added. Subsequently, they were mixed and stirred at 30-50°C for a certain period of time to obtain an applicable coating material. The coating material was applied to the substrate by a conventional coating method such as spray coating, dip coating, flow coating, and the like, and cured at 150-200°C for 10-90 minutes to form a high-gloss black organic-inorganic hybrid layer, which had a thickness of 14-17 µm.

Figure 5(h) shows the exterior decorative part product with the high-gloss black organic-inorganic hybrid layer of Comparative Example 1. It can be seen that obvious wrinkling and cracking occurred in the area near the edge.

Figure 5(i) shows the exterior decorative part product with the high-gloss black organic-inorganic hybrid layer of Comparative Example 2. It can be seen that coating cracking occurred in the area near the edge, and particles as well as some particle shedding can be observed with naked eyes.

## Claims

1. A surface treatment method for metal or alloy, comprising forming an organic-inorganic hybrid layer on the surface of an anodized layer on at least one surface of the metal or alloy;
wherein the organic-inorganic hybrid layer has a spatial network structure formed by silicon dioxide, and contains a copolymer of an epoxy-containing organooxysilane and a hydroxyl-containing benzophenone-based compound, and nanosized ultrafine carbon black.

2. The surface treatment method according to claim 1, wherein the nanosized ultrafine carbon black is nanosized ultrafine carbon black having a particle size D90 of 10-250 nm.

3. The surface treatment method according to claim 2, wherein the nanosized ultrafine carbon black is nanosized ultrafine carbon black having a particle size D90 of 50-150 nm.

4. The surface treatment method according to any one of claims 1-3, wherein the spatial network structure formed by silicon dioxide in the organic-inorganic hybrid layer is formed from oligomers generated by dehydration condensation of two or more organooxysilanes.

5. The surface treatment method according to claim 4, wherein at least one of the organooxysilanes contains an epoxy group.

6. The surface treatment method according to claim 4 or 5, wherein at least one of the organooxysilanes is free of an epoxy group.

7. The surface treatment method according to any one of claims 4-6, wherein the organooxysilane includes at least one or a combination of two or more of dialkoxysilanes, trialkoxysilanes, and tetraalkoxysilanes.

8. The surface treatment method according to claim 5, wherein the epoxy-containing organooxysilane includes one or a combination of two or more of 3-(2,3-glycidoxy)propyltrimethoxysilane, 3-(2,3-glycidoxy)propylmethyldimethoxysilane, 3-(2,3-glycidoxy)propyltriethoxysilane, 2-(3,4-epoxycyclohexyl)ethyltrimethoxysilane, and 2-(3,4-epoxycyclohexyl)ethylmethyldimethoxysilane.

9. The surface treatment method according to claim 6, wherein the epoxy-free organooxysilane includes compounds represented by general formula RₐSiX₍₄₋ₐ₎, wherein a is 0-3, R represents a non-hydrolyzable group selected from an alkyl group, an alkenyl group, an alkynyl group, and an aryl group; and X represents a hydrolyzable group selected from an alkoxy group, an aryloxy group, an acyloxy group, and an alkyl carbonyl group.

10. The surface treatment method according to claim 9, wherein the epoxy-free organooxysilane includes one or a combination of two or more of methyltrimethoxysilane, tetramethoxysilane, tetraacetoxysilane, methylphenyldimethoxysilane, dimethoxydiacetoxysilane, diethyldiacetoxysilane, di-tert-butyloxydiacetoxysilane, diethoxydiphenylsilane, and trimethylphenoxysilane.

11. The surface treatment method according to any one of claims 1-10, wherein the copolymer of the epoxy-containing organooxysilane and the hydroxyl-containing benzophenone-based compound is crosslinked in the spatial network structure through hydroxyl groups.

12. The surface treatment method according to claim 11, wherein the hydroxyl-containing benzophenone-based compound includes 2,4-dihydroxybenzophenone, 2,2',3-trihydroxybenzophenone, 2,2',4-trihydroxybenzophenone, 2,2',5-trihydroxybenzophenone, 2,2',6-trihydroxybenzophenone, 2,2',4,4'-tetrahydroxybenzophenone, 2,4-dihydroxy-2',4'-dimethoxybenzophenone, or 2-hydroxy-4-n-octoxybenzophenone.

13. The surface treatment method according to any one of claims 1-12, wherein the organic-inorganic hybrid layer has a thickness of 5 µm to 25 µm.

14. The surface treatment method according to claim 13, wherein the organic-inorganic hybrid layer has a thickness of 8 µm to 20 µm.

15. The surface treatment method according to any one of claims 1-14, wherein the alloy is an aluminum alloy.

16. The surface treatment method according to any one of claims 1-15, wherein the anodized layer has a thickness of 5 µm to 20 µm.

17. The surface treatment method according to claim 16, wherein the anodized layer has a thickness of 8 µm to 15 µm.

18. The surface treatment method according to any one of claims 1-17, wherein in preparation of the organic-inorganic hybrid layer, the solvent used includes a first co-solvent and a second co-solvent.

19. The surface treatment method according to claim 18, wherein the organic-inorganic hybrid layer is formed by selecting at least one epoxy-containing organooxysilane and one epoxy-free organooxysilane to generate oligomers by hydrolysis; adding the copolymer of an epoxy-containing organooxysilane and a hydroxyl-containing benzophenone-based compound and the nanosized ultrafine carbon black; adding the first co-solvent and the second co-solvent; mixing and stirring them at 30-50°C; applying the resultant mixture to a substrate; and curing the applied mixture at 150-200°C for 10-90 minutes to form a high-gloss black organic-inorganic hybrid layer.

20. The surface treatment method according to claim 19, wherein the content of the epoxy-containing organooxysilane for generating the oligomers through hydrolysis is 16.3%-18.5%, the content of the epoxy-free organooxysilane is 3.6%-4.8%, the content of the epoxy-containing organooxysilane for generating the copolymer with the hydroxyl-containing benzophenone-based compound is 5.3%-15.4%, the content of the hydroxyl-containing benzophenone-based compound is 1.3%-3.8%, the content of the nanosized ultrafine carbon black is 2.8%-12.5%, the content of the first co-solvent is 10.0%-30.0%, and the content of the second co-solvent is 30.3%-40.7%.

21. The surface treatment method according to claim 20, wherein the content of the first co-solvent is 18.2%-24.4%.

22. The surface treatment method according to claim 20, wherein the content of the second co-solvent is 30.3%-40.7%.

23. The surface treatment method according to claim 19, wherein the first co-solvent includes water.

24. The surface treatment method according to claim 19, wherein the second co-solvent includes a lower alcohol and/or a glycol ether.

25. The surface treatment method according to claim 24, wherein the lower alcohol includes one or a combination of two or more of methanol, ethanol, and isopropanol; the glycol ether includes one or a combination of two or more of ethylene glycol monomethyl ether, diethylene glycol monomethyl ether, ethylene glycol monobutyl ether, diethylene glycol monobutyl ether propylene glycol monomethyl ether, and dipropylene glycol monomethyl ether.

26. A metal or alloy product, having an anodized layer and an organic-inorganic hybrid layer on at least one surface thereof, wherein the organic-inorganic hybrid layer is formed on the surface of the anodized layer;
wherein the organic-inorganic hybrid layer has a spatial network structure formed by silicon dioxide, and contains a copolymer of an epoxy-containing organooxysilane and a hydroxyl-containing benzophenone-based compound, and nanosized ultrafine carbon black.

27. The metal or alloy product according to claim 26, wherein the nanosized ultrafine carbon black is nanosized ultrafine carbon black having a particle size D90 of 10-250 nm.

28. The metal or alloy product according to claim 27, wherein the nanosized ultrafine carbon black is nanosized ultrafine carbon black having a particle size D90 of 50-150 nm.

29. The metal or alloy product according to any one of claims 26-28, wherein the spatial network structure formed by silicon dioxide in the organic-inorganic hybrid layer is formed from oligomers generated by dehydration condensation of two or more organooxysilanes.

30. The metal or alloy product according to claim 29, wherein at least one of the organooxysilanes contains an epoxy group.

31. The metal or alloy product according to claim 29 or 30, wherein at least one of the organooxysilanes is free of an epoxy group.

32. The metal or alloy product according to any one of claims 29-31, wherein the organooxysilane includes at least one or a combination of two or more of dialkoxysilanes, trialkoxysilanes, and tetraalkoxysilanes.

33. The metal or alloy product according to claim 30, wherein the epoxy-containing organooxysilane includes one or a combination of two or more of 3-(2,3-glycidoxy)propyltrimethoxysilane, 3-(2,3-glycidoxy)propylmethyldimethoxysilane, 3-(2,3-glycidoxy)propyltriethoxysilane, 2-(3,4-epoxycyclohexyl)ethyltrimethoxysilane, and 2-(3,4-epoxycyclohexyl)ethylmethyldimethoxysilane.

34. The metal or alloy product according to claim 31, wherein the epoxy-free organooxysilane includes compounds represented by general formula RₐSiX₍₄₋ₐ₎, wherein a is 0-3, R represents a non-hydrolyzable group selected from an alkyl group, an alkenyl group, an alkynyl group, and an aryl group; and X represents a hydrolyzable group selected from an alkoxy group, an aryloxy group, an acyloxy group, and an alkyl carbonyl group.

35. The metal or alloy product according to claim 34, wherein the epoxy-free organooxysilane includes one or a combination of two or more of methyltrimethoxysilane, tetramethoxysilane, tetraacetoxysilane, methylphenyldimethoxysilane, dimethoxydiacetoxysilane, diethyldiacetoxysilane, di-tert-butyloxydiacetoxysilane, diethoxydiphenylsilane, and trimethylphenoxysilane.

36. The metal or alloy product according to any one of claims 26-35, wherein the copolymer of the epoxy-containing organooxysilane and the hydroxyl-containing benzophenone-based compound is crosslinked in the spatial network structure through hydroxyl groups.

37. The metal or alloy product according to claim 36, wherein the hydroxyl-containing benzophenone-based compound includes 2,4-dihydroxybenzophenone, 2,2',3-trihydroxybenzophenone, 2,2',4-trihydroxybenzophenone, 2,2',5-trihydroxybenzophenone, 2,2',6-trihydroxybenzophenone, 2,2',4,4'-tetrahydroxybenzophenone, 2,4-dihydroxy-2',4'-dimethoxybenzophenone, or 2-hydroxy-4-n-octoxybenzophenone.

38. The metal or alloy product according to any one of claims 26-37, wherein the organic-inorganic hybrid layer has a thickness of 5 µm to 25 µm.

39. The metal or alloy product according to claim 38, wherein the organic-inorganic hybrid layer has a thickness of 8 µm to 20 µm.

40. The metal or alloy product according to any one of claims 26-39, wherein the alloy is an aluminum alloy.

41. The metal or alloy product according to any one of claims 26-40, wherein the anodized layer has a thickness of 5 µm to 20 µm.

42. The metal or alloy product according to claim 41, wherein the anodized layer has a thickness of 8 µm to 15 µm.

43. The metal or alloy product according to any one of claims 26-42, wherein in preparation of the organic-inorganic hybrid layer, the solvent used includes a first co-solvent and a second co-solvent.

44. The metal or alloy product according to claim 43, wherein the organic-inorganic hybrid layer is formed by selecting at least one epoxy-containing organooxysilane and one epoxy-free organooxysilane to generate oligomers by hydrolysis; adding the copolymer of an epoxy-containing organooxysilane and a hydroxyl-containing benzophenone-based compound and the nanosized ultrafine carbon black; adding the first co-solvent and the second co-solvent; mixing and stirring them at 30-50°C; applying the resultant mixture to a substrate; and curing the applied mixture at 150-200°C for 10-90 minutes to form a high-gloss black organic-inorganic hybrid layer.

45. The metal or alloy product according to claim 44, wherein the content of the epoxy-containing organooxysilane for generating the oligomers through hydrolysis is 16.3%-18.5%, the content of the epoxy-free organooxysilane is 3.6%-4.8%, the content of the epoxy-containing organooxysilane for generating the copolymer with the hydroxyl-containing benzophenone-based compound is 5.3%-15.4%, the content of the hydroxyl-containing benzophenone-based compound is 1.3%-3.8%, the content of the nanosized ultrafine carbon black is 2.8%-12.5%, the content of the first co-solvent is 10.0%-30.0%, and the content of the second co-solvent is 30.3%-40.7%.

46. The metal or alloy product according to claim 45, wherein the content of the first co-solvent is 18.2%-24.4%.

47. The metal or alloy product according to claim 45, wherein the content of the second co-solvent is 30.3%-40.7%.

48. The metal or alloy product according to claim 44, wherein the first co-solvent includes water.

49. The metal or alloy product according to claim 44, wherein the second co-solvent includes a lower alcohol and/or a glycol ether.

50. The metal or alloy product according to claim 49, wherein the lower alcohol includes one or a combination of two or more of methanol, ethanol, and isopropanol; the glycol ether includes one or a combination of two or more of ethylene glycol monomethyl ether, diethylene glycol monomethyl ether, ethylene glycol monobutyl ether, diethylene glycol monobutyl ether propylene glycol monomethyl ether, and dipropylene glycol monomethyl ether.

51. The metal or alloy product according to any one of claims 26-50, wherein the metal or alloy product is a high-gloss black aluminum alloy exterior decorative part.

52. The metal or alloy product according to claim 51, wherein the orange peel R value of the high-gloss black aluminum alloy exterior decorative part is greater than 9.5, and both the SW value and LW value thereof are smaller than 5.

53. The metal or alloy product according to claim 52, wherein the high-gloss black aluminum alloy exterior decorative part is an automotive exterior decorative part.
